# EUROPEAN PATENT SPECIFICATION

(11) **EP 1 379 974 B1**
(45) Date of publication and mention of the grant of the patent: **07.01.2009**
(21) Application number: 02720679.6
(22) Date of filing: 10.04.2002
(51) Int. Cl.: G06F 17/30

(54) **SYSTEM FOR AUTOMATIC DISTRIBUTION OF UPDATED CONTACT INFORMATION**
SYSTEM ZUR AUTOMATISCHEN VERTEILUNG AKTUALISIERTER KONTAKTINFORMATIONEN
SYSTEME DE DIFFUSION AUTOMATIQUE D'INFORMATIONS DE CONTACT MISES A JOUR

(30) Priority: 10.04.2001 NO 20011837
(43) Date of publication of application: 14.01.2004
(60) Divisional application: 08011009.1
(73) Proprietor: ADDREZZ Systems AS, 0287 Oslo (NO)
(72) Inventor: HJERMANN, Lars, 1181 PX Amstelveen (NL); HURLEN, Arne, 0284 Oslo (NO); HATLEM, Petter, 0287 Oslo (NO)
(74) Representative: Westman, Per Börje Ingemar
(86) International application number: PCT/NO2002/000139
(87) International publication number: WO 2002/082319

(56) References cited:
- WO-A-00/22551
- WO-A-99/23591
- US-A- 5 873 096
- US-A- 5 928 329
- BUSINESS WIRE: "fusionOne Teams with European Carrier, ONE, to Offer Over-the-Air Synchronization to Wireless Subscribers" BUSINESS WIRE, [Online] 15 March 2000 (2000-03-15), XP001152227 Retrieved from the Internet: URL:http://www.findarticles.com/p/articles /mi_m0EIN/is_2000_March_15/ai_60108339/pri nt> [retrieved on 2007-02-28]

## Description

### Field of the invention

The present invention is related to a system for automatic distribution of updated information from one or more centralized registers to a network of decentralized devices.

### Background of the invention

Information concerning addresses, telephone numbers, place of work, e-mail addresses and other addressable identities have recently increased in volume and complexity. Changes in such information also seem to occur more frequently. The fact that people often change jobs, residence, cellular phones, and dwell and work in several different places are some of the reasons for this. Corrective information may be distributed by mail or e-mail, or sometimes orally. New contacts may be established by exchanging business cards, but the information of which will rapidly become outdated.

However, electronic storage of contact information will be more common as both the number of contacts per person and the need of always having correct contact information available increase.

Many people have their contact information localized in more than one place; in the cellular phone, the computer at home and at work, etc., but tend to update only the currently nearest register when a change in contact information is received. Further, even if a person to whom the change of information is concerned is careful about informing all his/her contacts about the change, he/she can not be sure that all contact registers in which he/she is included will be updated, as this is a manual job carried out by each of the receivers of the change information. Simultaneously, it has become cumbersome and time consuming to manually keeping the registers updated.

Today, there are some services for centralized storage and updating of contact information, wherein the users get access to information about their contacts, e.g. through a web interface. The main problem with these services is that they do not offer a complete "washing" of the contact and address registers the users might have locally stored on their personal terminals. Further, whether information regarding a contact actually exists in the system depends on whether or not the contact is registered as a user of the service. The fact that the service is based on that the information database is an integrated part of the system, makes the information incomplete (i.e. not all desired contacts of a user are necessarily users of the system) for most of the users.

U.S. patent 6,141,663 discloses a method and system for updating a number of databases with redundant data as the change occurs in a common central database. The changes are converted to the format of the respective databases. The object of this invention is to ensure that the content of the number of databases within the same network, organization or system corresponds to each other.

A method and a system for contact updating and contact synchronisation is disclosed in US 5,873,096 A (Lim, P.S. et al.) wherein the method and the system is adapted and designed to maintain a central database and a particular number of partially replicated databases (on distributed terminals) updated and synchronized, while transferring and storing a minimum of information, independent of where changes takes place. If information is changed on one terminal, this change will be valid in the central database and on every other terminal in the system "having access" to this information. The access is, according to said document, administered by the administrator of the central computer.

However; the above-mentioned patent application does not solve the problem of keeping address registers in distributed terminals updated. The solution is also based on manual, centralized maintenance of the information in the central database.

WO00/22551 discloses a controlled distribution of contact information over a network in a closed system. Changes to the contact information that are stored internally to the system are automatically distributed based on a distribution log to users that previously received said contact information. Said distribution log is not kept up-to-date with user contacts on a client side.

### Summary of the invention

It is an object of the present invention to provide an arrangement that eliminates the drawbacks described above. The features defined in the claims enclosed characterize this method.

The features defined in the claims enclosed characterize this method.

In particular, it is an object of the present invention to provide a system always keeping the content of a user's local contact register updated.

Another object of the present invention is to provide a system requiring a minimum of effort from the users.

A further object of the present invention is to provide a system keeping a number of registers belonging to one single user (on his/her cellular phone, PDA, PC. etc.) consistent.

These objects are achieved by providing the system according to the independent claims enclosed.

In particular, the system provides a solution wherein contact information, e.g. addresses and telephone numbers, automatically is distributed from one or more central registers to a network of decentralized devices containing local registers, e.g. each time a change in this information occurs.

The system according to the present invention comprises an information database, either external or integrated, and a central storage device identifying the users of the system through uniquely identifiable profiles and the contacts of the users by means of an indication of a number of contacts associated to each of the users. Further, when a change in the information database concerning a certain_contact appears, a means (being a node, a server, a portal etc.) makes sure that each user having this certain contact as one of his/her contacts receives update information regarding the change through one or more communication network(s) to the respective terminals of the users concerned.

According to a preferred embodiement of the present invention, the time of distributing update may be user-dependent. For example, all appearing changes concerning one of the contacts of a user may be distributed one time a day, one time a week, every time the user switches his/her terminal on, or possibly directly as the change occurs.

According to another preferred embodiment of the invention, the system is adjusted to update the registers of the user terminals immediately according to the distributed update information as it arrives at the terminals. If the information, e.g., is distributed through short messages, and the terminals are cellular phones, the short messages may be adjusted to change the information concerning a certain contact in the memory of the user's terminal according to the corresponding changes in the central information database.

The system is preferably administrated by an administration means through an admin interface i.a. taking care of registering of new users, removing or adding contacts of the users, changes in the information database, updating rules, etc.

### Brief description of the drawings

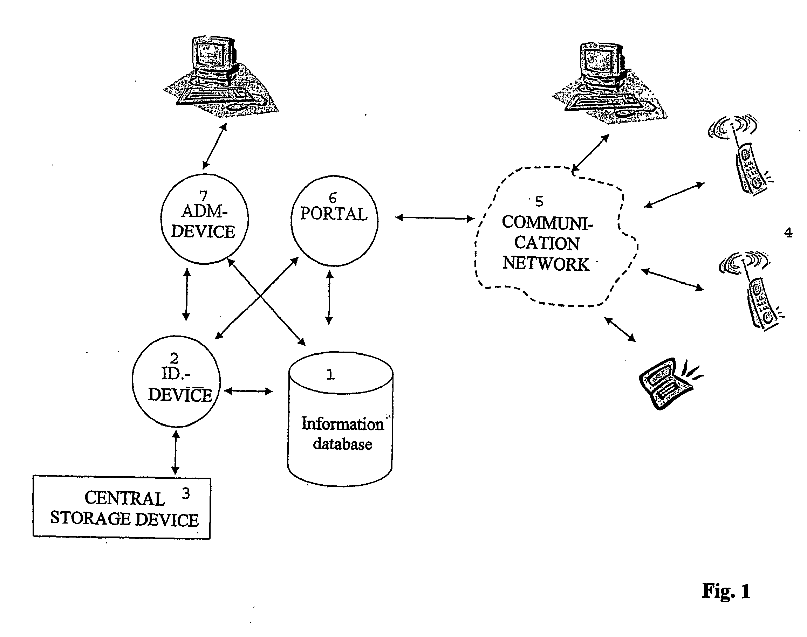

Fig. 1 illustrates the system architecture of a preferred embodiment of the present invention.

### Detailed description of the invention

In the following, preferred embodiments of the present invention will be described. The examples are for illustrative purposes only, and are not considered as limiting. All other embodiments within the scope of the independent claims will also be included in the invention.

One preferred embodiment of the present invention is a system comprising an *information database* (1) stored in an external storage device including personal data concerning contacts (persons, companies etc.), an *identifying device* (2), a *central storage device* (3), one or more local registers per user stored on platforms in user terminals *(4), communication networks* (5) through which updates between system and user is transferred, a *portal (6)* providing the distribution constituting the interface between the user's platform, communication network and system, and an *administration node* providing user registering, removing or adding contacts to the contact lists of the users etc.

A user is allowed to change the personal data in his/her own data area in the external storage device via the administration node. This may also be updated by the system administrator. A change in a data area of a contact will be automatically distributed to all users having this contact in their contact list, and will replace incorrect information in the registers of the users.

### External storage device

The external storage device is divided into a number of data areas, one per potential contact, and may include information concerning all addressable persons and companies (e.g. telefonkatalogen.no). By entering a user-id, the user is at any time allowed to change the personal data in his/her own data area. The personal data of a user may also be changed by the system administrator of the external storage device (e.g. operational staff at telefonkatalogen.no). This could be the case when the user, e.g., changes mobile operator and therefore receives a new telephone number and the system administrator has for the external storage device an updating agreement with relevant mobile operators.

The data area may include information such as addresses, telephone numbers, e-mail addresses, profession, work place and attachments. The attachments could, e.g., be some documents. The data area may also be a part of a general database or a database by itself.

The external storage device could also be an integrated part of the system.

### The identifying device

The identifying device identifies all changes in the external storage device concerning contacts included in one or more of the users' contact list. The identifying device is able to communicate with the external and the central storage device, (alternatively, the central storage device may be an integrated part of the identifying device) and the portal. When the identifying device detects that a change in the external storage device is a change of information stored for a contact included in a contact list of a user, it opens/enters the central storage device to find out which user(s) having the contact concerned included in his/her/their contact list(s). Then, a message is transmitted to the portal requesting the portal to distribute update information about the change to the terminal(s) of the user(s) found by the look up.

The identifying device also has tasks connected to user registering and changes in a contact list of a user (discussed in details below).

### The central storage device

The central storage device includes information regarding each user's contact list. Note that a user may have different contact lists on each of his/her terminal. In addition, the central storage device includes further necessary information that the system requires for each user. This information will in the following be referred to as a user profile. This profile should at least include:
- The user's terminals,
- Unique calling addresses to the respective terminals,
- Which platforms being used by the various terminals,
- In which folder new acquaintances should be placed (see also the paragraph "Changes in the contact list of a user" below),
- How much information should be stored per contact. Note that this may vary from terminal to terminal. For example, a cellular phone may have stored the telephone number of the contacts only, while a PC may store all information being available in the information database per contact,
- User specific updating rules, e.g. desired updating frequency of the local registers and desired updating frequency of possible additions and/or removals of contacts in the contact list, in addition to whether a user should be informed about the updating and if he/she has to approve it or not, if the updating should be carried out automatically and be "noiseless" (every time a user connects to the network), or if the updating should be requested by the user, etc. These rules may be defined per platform for each user.

### Terminals

Terminals are here referred to as devices in which the users have stored their contact registers. In a preferred embodiment, this may be cellular phones (including WAP phones) PCs, PDAs (Personal Digital Assistants), digital PSTN phones, Pocket PCs or SmartPhones.

### Platforms

The platforms in which the local registers of the users are stored may vary from terminal to terminal.

Examples of such platforms are Microsoft Outlook, the operative system in WAP/Cellular Phones or other PDA/PC/cellular phone systems or operative systems supporting storage of registers, i.e. supporting at least simple databases. In an operative system of a simple cellular telephone, these will typically operate on the telephone memory, and in data terminals (both handheld and stationary/portable) this will typically be the contact register of Microsoft Outlook.

### Administration node

The administration node has a user interface that may be a web interface. The users may register, change personal data in the external storage device, or change their profiles.

Consequently, the administration node has to have access and interface to both the central and external storage device.

### Portal

The portal is the interface between the system and the communication network(s) through which the updating is to be distributed. It has to be able to both receive and transmit data adjusted to this (these) communication network(s), as well as being able to communicate with other nodes in the system. It is also necessary that the portal is able to temporarily store the changes that are to be distributed, so that the terminals may be updated according to the predefined settings of each user for reception of changes.

For example, if a user chooses online updating on his/her PC or PDA, a "cookie" will be installed. A "cookie" is a small program calling up downloading possible changes from the portal at the moment the user connects to the communication network and/or at the time a change occurs.

### User registration

The user will be registered as a user of the system through the administration node by entering required information regarding the user profile in the user interface, and who upon response of that receives a user-id. Thereafter, the contact list of the user will be sent to the identifying device. The identifying device identifies all contacts in the contact list of the user in the external storage device, stores the profile including a specification of the identified contacts in the central storage device, arranged according to user and type of platform.

If the contact information in the register of a user does not correspond to the information in the external storage device, the information about the user in the register will be replaced with the information in the external storage device through the portal. If a contact is not found in the external storage device, the user may choose to either remove or keep this contact in his/her register(s). The user id is preferably the same for all terminals of one user, but there will be one unique address for each terminal. E.g., the address for a cellular phone will be its telephone number, as the communication preferably will be carried out via short messages. However, in case of a PC, the unique address will be an IP address.

### Changes in the external storage device

According to a preferred embodiment, a user may edit the data stored on his/her data area in the external storage device through the administration node. In this case, the administration device accesses the external storage device, and implements the changes given by this user. If the user is included in a contact list of one or more other user(s), the identifying device will, by a look-up in the central storage device, identify the change and find out which of the user(s) having the first user included in the associated contact list(s). Then the identifying device will transmit these or this other user(s) unique address(es), the user-id of the first user and the change of information to the portal. The portal may alternatively fetch the change directly from the external storage device. The change will thereafter be distributed to by the portal through one or more of the communication networks to the user or all users having the first user as in his/her/their contact list according to the above-mentioned predefined settings for reception of changes. How much of the change that is being transmitted to each terminal depends on the platforms of the terminals. E.g., if the local register is the memory of a simple cellular phone, only changes in the telephone number of the contact will be transmitted.

The changes are preferably transmitted on a data carrier being able to update the local registers directly.

Example: Updating of a cellular phone: The changes are transmitted as one or more SMS messages (or similar) to the cellular phone. The content of the SMS messages are preferably adjusted to directly replace old information with new information according to the change as the terminal receives the SMS. Example: Updating of Microsoft Outlook on a PC: The user has chosen online updating, and the change will be carried out automatically without notifying at the time the user connects to the communication network, e.g through an e-mail.

### Changes in the contact list of a user

When a user adds or removes a contact in his/her contact list on one of his/her platforms, the change will automatically be registered by the platform or alternatively on request from the user according to predefined settings regarding this in the profile of the user. The change will be distributed to the central storage device via the identifying device, and thereafter preferably to the other terminals the user may have. In case of adding a contact, information regarding this contact will be fetched from the external storage device and distributed to all the terminals defined for the user. How much of the contact information (and in which format) that is distributed to each terminal depends on the platforms on the respective terminals and/or the updating rules.

Example: Automatically updating of the contact list of a user in the address register of the user's PC/PDA: A "cookie" transmits the whole register or the change only to the portal. The portal forwards the change/register to the identifying device, which identifies and updates the stored contact list of the user stored in the central storage device.

Example: Updating of the contact lists of the user in the address register by a PDA/PC on request: The user logs in to the administration device from his/her PC/PDA and makes the choice of editing contacts.

Example: Updating of the contact lists of the user in the address register by a cellular phone on request: The user transmits the changes of his/her contact list as an SMS to the portal or logs in to the administration node by means of WAP and makes the choice of editing contact lists.

### From a user's point of view

In the following, some aspects of how a user will experience the system are listed:
- The user is able to verify and update all his/her address registers on his/her PC/PDA and/or WAP phone only by means of a few keystrokes,
- The user has the possibility to provide immediate, automatic updating the information of a contact when this information is being changed,
- The user may choose to have his/her contact list updated in all his/her registers every time a change in the contact list in one of registers occurs,
- When the user changes the information regarding him-/herself in a central electronic catalogue, he/she can be sure that all other users having him/her as one of their contacts at any time possess with the right information, without making any further efforts (like mailing an address modification card),
- The user may keep his/her existing type of personal address register when using the system assuming that the register is known and compatible to the system.

In the following, a user example will be discussed:
During the night, a user of the system makes three potential acquaintances (A, B and C) and enters their names and telephone numbers in the memory of his cellular phone. The cellular phone then transmits the new extended register (or only the change that has been introduced) as an SMS to the portal. The portal identifies the new contact on basis of the entered telephone number and the identifying device updates the contact lists of the user. By this, the new acquaintances A, B and C will automatically be included in all the contact lists of the user.

Two days later, the user finds out that he would like to mail a letter to acquaintance A, and needs his postal address. When the user was registered to the system, he chose updating of his registers at the time of logging on to the communication network. He switches on his PC and logs on to Internet before starting Microsoft Outlook. The acquaintances A, B and C are already stored in the folder of new acquaintances as completely filled address cards. He arranges them in proper folders, A in the "private" folder and B in the folder of business connections, while he deletes C even if he knows that this implies removal of C also in the contact list of his cellular phone. He pastes the postal address of acquaintance A in a document and posts it.

For some reason, the same user has to change his telephone number, and registers the change in his data area in the information database through the administration node. A few hours later, acquaintance B calls him on the new telephone number.

## Claims

1. A system with a number of users each having one or more personal storage device(s) associated with one or more communication networks, said personal storage device(s) include(s) contact registers including information specifying the respective contacts of the users, one or more general information database(s) externally connected to the system,
**characterized in**
a central storage device including a unique identifiable profile for each of said users and a specification of each of the users' said contacts, as stored in said personal storage device(s),
a first means, adjusted to identify if a change of information occurring in the information database(s) is a change concerning a certain contact specified as a contact of one or more of the users stored in said central storage device, said first means being able to communicate with said information database(s) and said central storage device,
a second means, adjusted to distribute, at a change of information occurring in the information database(s) identified by said first means, updating information related to said change through said one or more communication networks only to the personal storage device(s) associated with the user(s) having said certain contact specified in said central storage device, whereby said second means is arranged to temporarily store the changes that are to be distributed.

2. System according to claim 1,
**characterized in that** said personal storage device(s) is/are localized on user terminals.

3. System according to one of the preceding claims,
**characterized in that** the second means is able to communicate with the information database(s), said first means and/or said central storage device.

4. System according to one of the preceding claims,
**characterized in that** the second means is able to temporarily store said updating information, the way said distribution to each terminal is carried through depends on predefined, user-dependent updating rules.

5. System according to one of the preceding claims,
**characterized in** an administration device providing registering of users, changes of user profiles, contacts, and/or changes in the information database(s) through a user interface.

6. System according to one of the preceding claims,
**characterized in that** said profiles of the users include at least the users' respective terminal type(s) and associated unique address(s), e.g. telephone numbers, mail address(s) or IP addresses, type of contact register platform being used in each respective terminal, and updating rules.

7. System according to one of the preceding claims,
**characterized in** a third means for updating said specification of the contacts of a user when this user adds and/or removes one or more contacts in his/her contact register(s).

8. System according to one of the claims 5 - 7,
**characterized in that that** registering of a new user is carried through **in that** the user gives required information to the administration device via said interface so that the administration device is able to create a profile in addition to a specification of contacts for this user in said central storage device.

9. System according to one of the preceding claims,
**characterized in that** said information database(s) is stored either on a system internal or an external storage device.

10. System according to one of the preceding claims,
**characterized in that** said central storage device is integrated in the information database.

11. System according to one of the preceding claims,
**characterized in that** one or more of said communication network is a mobile telephone network.

12. System according to claim 11,
**characterized in that** said updating information is distributed by means of SMS messages, and said SMS messages are adjusted to automatically update the contact registers concerned according to the updating information.

13. System according to one of the claim 1 -11,
**characterized in that** said updating information is distributed and the contact registers concerned are updated by means of WAP technology.

14. System according to one of the preceding claims,
**characterized in that** said updating information is distributed through a means adjusted to automatically update the contact registers concerned according to the updating information.

15. System according to one of the preceding claims,
**characterized in that** at least some of said terminals are cellular phones.

16. System according to one of the preceding claims,
**characterized in that** at least some of said terminals are PDA's (Personal Digital Assistant).

17. System according to one of the preceding claims,
**characterized in that** at least some of said terminals are PC's (Personal Computers).

18. System according to one of the preceding claims,
**characterized in that** said contact register platform is Microsoft Outlook, Lotus Notes or a terminal specific menu system.

19. System according to one of the claims 5 - 18,
**characterized in that** said administration device is accessible through Internet, said interface is a web based interface.

20. System according to one of the claims 5 - 18,
**characterized in that** said administration device is accessible through a WAP portal, said interface is a WAP based interface.

21. System according to one of the claims 5 - 18,
**characterized in that** said administration device is accessible through a user interface installed locally on the terminals of the user.

22. A method for automatically updating a contact register, including information specifying respective contacts, of users in a system where a number of users each having one or more personal storage device(s) are associated with one or more communication networks, said personal storage device(s) include(s) contact registers including information specifying the respective contacts of the users,
**characterized in**
**that** said specification of the respective contacts of the users are stored both centrally and in the respective personal storage device(s) of the users, centrally storing a unique identifiable profile for each of said users togheter with said users contact registers as stored in said personal storage device(s).
identifying one or more changes occurring in one or more information databases that is/are externally connected to said system concerning a certain contact specified as a contact of one or more of the users, temporarity storing changes that are to be distributed, and
distributing updating information related to said one or more change through said one or more communication networks only to the personal storage device(s) of said one or more of the users that have said certain contact specified as a contact in their contact register.

23. Method according to claim 22,
**characterized in**
updating the contact register(s) of said one or more of the users based on said updating information.

24. Method according to claim 22 or 23
**characterized in**
updating said specification of the contacts of a user both in said central storage device and in possible other personal storage device(s) of that user when the user adds and/or removes one or more contacts in a contact register in one or more of the personal storage devices of the user.

## Patentansprüche

1. System mit einer Anzahl von Anwendern, wovon jeder eine oder mehrere persönliche Speichervorrichtungen, die einem oder mehreren Kommunikationsnetzen zugeordnet sind, besitzt, wobei die eine oder die mehreren persönlichen Speichervorrichtungen Kontaktregister, die Informationen enthalten, die die jeweiligen Kontakte der Anwender spezifizieren, sowie eine oder mehrere allgemeine
Informationsdatenbanken enthalten,
**gekennzeichnet durch**
eine zentrale Speichervorrichtung, die ein eindeutiges identifizierbares Profil für jeden der Anwender und eine Spezifizierung jedes der Anwenderkontakte, die in der einen oder den mehreren persönlichen Speichervorrichtungen gespeichert sind, enthält,
ein erstes Mittel, das dazu ausgelegt ist, festzustellen, ob eine Änderung von Informationen, die in der einen oder in den mehreren Informationsdatenbanken auftritt, eine Änderung ist, die einen bestimmten Kontakt betrifft, der als Kontakt eines oder mehrerer der Anwender spezifiziert ist, die in der zentralen Speichervorrichtung gespeichert sind, wobei das erste Mittel mit der einen oder den mehreren Informationsdatenbanken und mit der zentralen Speichervorrichtung kommunizieren kann,
ein zweites Mittel, das dazu ausgelegt ist, bei einer **durch** das erste Mittel festgestellten Änderung von Informationen, die in der einen oder in den mehreren Informationsdatenbanken auftritt, Aktualisierungsinformationen, die mit der Änderung in Beziehung stehen, über das eine oder die mehreren Kommunikationsnetze nur zu der einen oder den mehreren persönlichen Speichervorrichtungen zu verteilen, die dem einen oder den mehreren Anwendern zugeordnet sind, für die der bestimmte Kontakt in der zentralen Speichervorrichtung spezifiziert ist, wobei das zweite Mittel dazu ausgelegt ist, die zu verteilenden Änderungen vorübergehend zu speichern.

2. System nach Anspruch 1,
**dadurch gekennzeichnet, dass** sich die eine oder die mehreren persönlichen Speichervorrichtungen in Anwenderendgeräten befinden.

3. System nach einem der vorhergehenden Ansprüche,
**dadurch gekennzeichnet, dass** das zweite Mittel mit der einen oder den mehreren Informationsdatenbanken, mit dem ersten Mittel und/oder mit der zentralen Speichervorrichtung kommunizieren kann.

4. System nach einem der vorhergehenden Ansprüche,
**dadurch gekennzeichnet, dass** das zweite Mittel die Aktualisierungsinformationen vorübergehend speichern kann, wobei die Weise, auf die die Verteilung zu jedem Endgerät erfolgt, von im Voraus definierten, anwenderabhängigen Aktualisierungsregeln abhängt.

5. System nach einem der vorhergehenden Ansprüche,
**gekennzeichnet durch** eine Administratorvorrichtung, die über eine Anwenderschnittstelle die Registrierung von Anwendern, Änderungen von Anwenderprofilen und von Kontakten und/oder Änderungen in der einen oder den mehreren Informationsdatenbanken bereitstellt.

6. System nach einem der vorhergehenden Ansprüche,
**dadurch gekennzeichnet, dass** die Profile der Anwender wenigstens den einen oder die mehreren Typen der Anwenderendgeräte und zugeordnete eindeutige Adressen, z. B. Telephonnummern, E-Mail-Adressen oder IP-Adressen, den Typ der Kontaktregisterplattform, die in jedem entsprechenden Endgerät verwendet wird, und Aktualisierungsregeln enthalten.

7. System nach einem der vorhergehenden Ansprüche,
**gekennzeichnet durch** ein drittes Mittel zum Aktualisieren der Spezifizierung der Kontakte eines Anwenders, wenn dieser Anwender einen oder mehrere Kontakte zu seinem oder seinen Kontaktregistern hinzufügt und/oder hiervon entfernt.

8. System nach einem der Ansprüche 5-7,
**dadurch gekennzeichnet, dass** das Registrieren eines neuen Anwenders **dadurch** ausgeführt wird, dass der Anwender über die Schnittstelle erforderliche Informationen in die Administratorvorrichtung eingibt, so dass die Administratorvorrichtung zusätzlich zu einer Spezifizierung von Kontakten für diesen Anwender ein Profil in der zentralen Speichervorrichtung erzeugen kann.

9. System nach einem der vorhergehenden Ansprüche,
**dadurch gekennzeichnet, dass** die eine oder die mehreren Informationsdatenbanken entweder systemintern oder in einer externen Speichervorrichtung gespeichert sind.

10. System nach einem der vorhergehenden Ansprüche,
**dadurch gekennzeichnet, dass** die zentrale Speichervorrichtung in die Informationsdatenbank integriert ist.

11. System nach einem der vorhergehenden Ansprüche,
**dadurch gekennzeichnet, dass** eines oder mehrere der Kommunikationsnetze ein Mobiltelephonnetz sind.

12. System nach Anspruch 11,
**dadurch gekennzeichnet, dass** die Aktualisierungsinformationen durch SMS-Nachrichten verteilt werden und die SMS-Nachrichten dazu ausgelegt sind, die betroffenen Kontaktregister in Übereinstimmung mit den Aktualisierungsinformationen automatisch zu aktualisieren.

13. System nach einem der Ansprüche 1-11,
**dadurch gekennzeichnet, dass** die Verteilung der Aktualisierungsinformationen und die Aktualisierung der betroffenen Kontaktregister mittels der WAP-Technologie erfolgen.

14. System nach einem der vorhergehenden Ansprüche,
**dadurch gekennzeichnet, dass** die Aktualisierungsinformationen durch ein Mittel verteilt werden, das dazu ausgelegt ist, die betroffenen Kontaktregister in Übereinstimmung mit den Aktualisierungsinformationen automatisch zu aktualisieren.

15. System nach einem der vorhergehenden Ansprüche,
**dadurch gekennzeichnet, dass** wenigstens einige der Endgeräte Zellentelephone sind.

16. System nach einem der vorhergehenden Ansprüche,
**dadurch gekennzeichnet, dass** wenigstens einige der Endgeräte PDAs (Personal Digital Assistants) sind.

17. System nach einem der vorhergehenden Ansprüche,
**dadurch gekennzeichnet, dass** wenigstens einige der Endgeräte PCs (Personal Computers) sind.

18. System nach einem der vorhergehenden Ansprüche,
**dadurch gekennzeichnet, dass** die Kontaktregisterplattform Microsoft Outlook, Lotus Notes oder ein für das Endgerät spezifisches Menüsystem ist.

19. System nach einem der Ansprüche 5-18,
**dadurch gekennzeichnet, dass** auf die Administratorvorrichtung über das Internet zugegriffen werden kann, wobei die Schnittstelle eine web-basierte Schnittstelle ist.

20. System nach einem der Ansprüche 5-18,
**dadurch gekennzeichnet, dass** auf die Administratorvorrichtung über ein WAP-Portal zugegriffen werden kann, wobei die Schnittstelle eine WAP-basierte Schnittstelle ist.

21. System nach einem der Ansprüche 5-18,
**dadurch gekennzeichnet, dass** auf die Administratorvorrichtung über eine Anwenderschnittstelle zugegriffen werden kann, die lokal bei den Endgeräten des Anwenders installiert ist.

22. Verfahren zum automatischen Aktualisieren eines Kontaktregisters, das Informationen enthält, die entsprechende Kontakte von Anwendern in einem System spezifizieren, wobei mehrere Anwender, wovon jeder eine oder mehrere persönliche Speichervorrichtungen besitzt, einem oder mehreren Kommunikationsnetzen zugeordnet sind, wobei die persönlichen Speichervorrichtungen Kontaktregister enthalten, die Informationen enthalten, die die jeweiligen Kontakte der Anwender spezifizieren,
**dadurch gekennzeichnet,**
**dass** die Spezifizierungen der jeweiligen Kontakte der Anwender sowohl zentral als auch in den jeweiligen persönlichen Speichervorrichtungen der Anwender gespeichert werden,
ein eindeutiges identifizierbares Profil für jeden der Anwender zusammen mit den Kontaktregistern der Anwender, die in den persönlichen Speichervorrichtungen gespeichert sind, zentral gespeichert wird,
eine oder mehrere Änderungen, die in einer oder in mehreren mit dem System extern verbundenen Informationsdatenbanken auftreten und einen bestimmten Kontakt betreffen, der als Kontakt eines oder mehrerer der Anwender spezifiziert ist, festgestellt werden,
Änderungen, die zu verteilen sind, vorübergehend gespeichert werden, und
Aktualisierungsinformationen, die mit der einen oder den mehreren Änderungen in Beziehung stehen, über das eine oder die mehreren Kommunikationsnetze nur zu den persönlichen Speichervorrichtungen des einen oder der mehreren Anwender, für die dieser bestimmte Kontakt als Kontakt in ihrem Kontaktregister spezifiziert ist, verteilt werden.

23. Verfahren nach Anspruch 22,
**gekennzeichnet durch**
Aktualisieren der Kontaktregister des einen oder der mehreren Anwender anhand der Aktualisierungsinformationen.

24. Verfahren nach Anspruch 22 oder 23,
**gekennzeichnet durch**
Aktualisieren der Spezifizierung der Kontakte eines Anwenders sowohl in der zentralen Speichervorrichtung als auch in möglichen anderen persönlichen Speichervorrichtungen dieses Anwenders, wenn der Anwender einen oder mehrere Kontakte zu einem Kontaktregister in einer oder in mehreren der persönlichen Speichervorrichtungen des Anwenders hinzufügt und/oder hiervon entfernt.

## Revendications

1. Système avec un nombre d'utilisateurs ayant chacun un ou plusieurs dispositif(s) de stockage personnel associé(s) à un ou plusieurs réseau(x) de communication, le(s)dit(s) dispositif(s) de stockage personnel comprend(nent) des registres de contact comprenant des informations spécifiant les contacts respectifs des utilisateurs, une ou plusieurs base(s) de données d'informations générales, raccordée(s) de façon externe au système,
**caractérisé par**
un dispositif de stockage central comprenant un profil identifiable unique pour chacun desdits utilisateurs et une spécification de chacun des utilisateurs desdits contacts, comme stocké dans le(s)dit(s) dispositif(s) de stockage personnel,
un premier moyen, ajusté pour identifier si un changement d'informations se produisant dans la (les) base(s) de données d'informations est un changement concernant un certain contact spécifié comme un contact d'un ou plusieurs des utilisateurs stockés dans ledit dispositif de stockage central, ledit premier moyen étant capable de communiquer avec la(les)dite(s) base(s) de données d'informations et ledit dispositif de stockage central,
un second moyen, ajusté pour distribuer, à un changement d'informations se produisant dans la (les) bases de données d'informations identifiée(s) par ledit premier moyen, mise à jour des informations liées audit changement à travers lesdits un ou plusieurs des réseau(x) de communication seulement pour le(s) dispositif(s) de stockage personnel associé(s) à l'(aux) utilisateur(s) ayant ledit certain contact spécifié dans ledit dispositif de stockage central, de sorte que ledit second moyen est disposé pour stocker temporairement les changements qui sont à distribuer.

2. Système selon la revendication 1, **caractérisé en ce que** le(s)dit(s) dispositif(s) de stockage personnel est/son localisé(s) sur des terminaux d'utilisateur.

3. Système selon l'une quelconque des revendications précédentes, **caractérisé en ce que** le second moyen est capable de communiquer avec la(les) base(s) de données d'informations, ledit premier moyen et/ou ledit dispositif de stockage central.

4. Système selon l'une quelconque des revendications précédentes, **caractérisé en ce que** le second moyen est capable de stocker temporairement lesdites informations de mise à jour, la manière dont ladite distribution pour chaque terminal est menée à bien dépend de règles de mise à jour prédéfinies, dépendantes de l'utilisateur.

5. Système selon l'une quelconque des revendications précédentes, **caractérisé par** un dispositif d'administration fournissant l'enregistrement d'utilisateurs, des changements de profils d'utilisateur, des contacts et/ou changements dans la(les) base(s) de données d'informations à travers une interface d'utilisateur.

6. Système selon l'une quelconque des revendications précédentes, **caractérisé en ce que** lesdits profils des utilisateurs comprennent au moins le(s) type(s) de terminal respectif(s) d'utilisateurs et une(des) adresse(s) unique(s) associée(s), par exemple numéros de téléphone, adresse(s) email ou adresses IP, le type de plate-forme d'enregistrement de contact étant utilisé dans chaque terminal respectif, et des règles de mise à jour.

7. Système selon l'une quelconque des revendications précédentes, **caractérisé par** un troisième moyen pour mettre à jour ladite spécification des contacts d'un utilisateur lorsque cet utilisateur ajoute et/ou enlève un ou plusieurs contact(s) dans son(ses) registre(s) de contact.

8. Système selon l'une quelconque des revendications 5 à 7, **caractérisé en ce que** l'enregistrement d'un nouvel utilisateur est mené à bien **en ce que** l'utilisateur donne des informations requises au dispositif d'administration via ladite interface pour que le dispositif d'administration soit capable de créer un profil en plus d'une spécification de contacts pour cet utilisateur dans ledit dispositif de stockage central.

9. Système selon l'une quelconque des revendications précédentes, **caractérisé en ce que** la(les)dite(s) base(s) de données d'informations est/sont stockée(s) soit sur un système interne soit sur un dispositif de stockage externe.

10. Système selon l'une quelconque des revendications précédentes, **caractérisé en ce que** ledit dispositif de stockage central est intégré dans la base de données d'informations.

11. Système selon l'une quelconque des revendications précédentes, **caractérisé en ce qu'**un ou plusieurs desdits réseaux de communication est un réseau de téléphone mobile.

12. Système selon la revendication 11,
**caractérisé en ce que** lesdites informations de mise à jour sont distribuées au moyen de messages SMS, et lesdits messages SMS sont ajustés pour mettre à jour automatiquement les registres de contact concernés selon les informations de mise à jour.

13. Système selon l'une quelconque des revendications 1 à 11, **caractérisé en ce que** lesdites informations de mise à jour sont distribuées et les registres de contact concernés sont mis à jour au moyen d'une technologie WAP.

14. Système selon l'une quelconque des revendications précédentes, **caractérisé en ce que** lesdites informations de mise à jour sont distribuées à travers un moyen ajusté pour mettre à jour automatiquement les registres de contact concernés selon les informations de mise à jour.

15. Système selon l'une quelconque des revendications précédentes, **caractérisé en ce qu'**au moins certains desdits terminaux sont des téléphones cellulaires.

16. Système selon l'une quelconque des revendications précédentes, **caractérisé en ce qu'**au moins certains desdits terminaux sont des PDA (assistant numérique personnel).

17. Système selon l'une quelconque des revendications précédentes, **caractérisé en ce qu'**au moins certains desdits terminaux sont des ordinateurs personnels.

18. Système selon l'une quelconque des revendications précédentes, **caractérisé en ce que** ladite plate-forme de registre de contact est Microsoft Outlook, Lotus Notes ou un système de menu spécifique de terminal.

19. Système selon l'une quelconque des revendications 5 à 18, **caractérisé en ce que** ledit dispositif d'administration est accessible à travers l'Internet, ladite interface est une interface à base d'Internet.

20. Système selon l'une quelconque des revendications 5 à 18, **caractérisé en ce que** ledit dispositif d'administration est accessible à travers un portail WAP, ladite interface est une interface à base WAP.

21. Système selon l'une quelconque des revendications 5 à 18, **caractérisé en ce que** ledit dispositif d'administration est accessible à travers une interface d'utilisateur installée localement sur les terminaux de l'utilisateur.

22. Procédé pour mettre à jour automatiquement un registre de contact, comprenant des informations spécifiant des contacts respectifs, d'utilisateurs dans un système où un nombre d'utilisateurs ayant chacun un ou plusieurs dispositif(s) de stockage personnel sont associés à un ou plusieurs réseau(x) de communication, le(s)dit(s) dispositif(s) de stockage personnel comprend(nent) des registres de contact comprenant des informations spécifiant les contacts respectifs des utilisateurs,
**caractérisé en ce que**
ladite spécification des contacts respectifs des utilisateurs est stockée à la fois centralement et dans le(s) dispositif(s) de stockage personnel respectif(s) des utilisateurs stockant centralement un profil identifiable unique pour chacun desdits utilisateurs ainsi que lesdits registres de contact d'utilisateurs comme stocké dans le(s)dit(s) dispositif(s) de stockage personnel,
l'identification d'un ou plusieurs changement(s) se produisant dans une ou plusieurs base(s) de données d'informations qui est/sont raccordée(s) de façon externe audit système concernant un certain contact spécifié comme un contact d'un ou plusieurs des utilisateurs,
stockage temporairement des changements qui sont à distribuer, et
distribution des informations de mise à jour liées à un ou plusieurs dit(s) changement(s) à travers un ou plusieurs réseau(x) de communication seulement au(x) dispositif(s) de stockage personnel desdits un ou plusieurs utilisateur(s) qui ont ledit certain contact spécifié comme un contact dans leur registre de contact.

23. Procédé selon la revendication 22,
**caractérisé par**
la mise à jour du(des) registre(s) de contact desdits un ou plusieurs des utilisateurs sur la base desdites informations de mise à jour.

24. Procédé selon la revendication 22 ou 23,
**caractérisé par**
la mise à jour de ladite spécification des contacts d'un utilisateur à la fois dans ledit dispositif de stockage central et dans d'autre(s) dispositif(s) de stockage personnel possible(s) de cet utilisateur lorsque l'utilisateur ajoute et/ou enlève un ou plusieurs contact(s) dans un registre de contact dans un ou plusieurs des dispositifs de stockage personnel d'utilisateur.
